# EUROPÄISCHE PATENTANMELDUNG

(11) **EP 1 338 186 A2**
(43) Veröffentlichungstag der Anmeldung: **27.08.2003**
(21) Anmeldenummer: 03003306.2
(22) Anmeldetag: 13.02.2003
(51) Int. Cl.: A01B 69/00

(54) **Spurführungssystem an einer landwirtschaftlichen Arbeitsmaschine**

(30) Priorität: 26.02.2002 DE 10208012
(71) Anmelder: CLAAS Selbstfahrende Erntemaschinen GmbH, 33428 Harsewinkel (DE)
(72) Erfinder: Brunnert, Andreas, 33129 Delbrück (DE); Diekhans, Norbert, Dr., 33335 Gütersloh (DE); Huster, Jochen, 33330 Gütersloh (DE)

(57) **Zusammenfassung**

Die vorliegende Erfindung bezieht sich auf ein Spurführungssystem an einer landwirtschaftlichen Arbeitsmaschine (1) mit wenigstens einem Arbeitsgerät (2), wobei die Arbeitsmaschine (1) auf dem Bearbeitungsfeld (9,10) von wenigstens einem Maschinenführungssystem (4) spurgeführt und die Lage der Leitgröße (8) zumindest bezüglich des Arbeitsgerätes (2) von einer Geräte- Ortungsvorrichtung (3) ermittelt wird. Bekannte Spurführungssysteme sind kostenintensiv und erbringen in der Regel nur beim Einsatz in der Ebene und entlang einer annähernd geradeaus verlaufenden Bearbeitungskante (8) ein ausreichendes Arbeitsergebnis. Diesem Mangel wird durch das erfindungsgemäße Spurführungssystem abgeholfen, welches dadurch gekennzeichnet ist, dass die Geräte- Ortungsvorrichtung (3) die Leitgröße (8) im Eingriffsbereich des Arbeitsgerätes (2) ortet und auf das Maschinenführungssystem (4) zur optimalen Auslastung des Arbeitsgerätes (2) korrigierend einwirken kann. Durch diese erfindungsgemäß vorgeschlagene Lösung, wird eine annähernde optimale Auslastung des Arbeitsgerätes (2) auch bei einer Bearbeitung einer Leitgröße (8) entlang eines Hangs oder entlang einer längeren Kurve erzielt.

## Beschreibung

Die vorliegende Erfindung bezieht sich auf ein Spurführungssystem an einer landwirtschaftlichen Arbeitsmaschine mit wenigstens einem Arbeitsgerät, wobei die Arbeitsmaschine auf dem Bearbeitungsfeld von wenigstens einem Maschinenführungssystem spurgeführt und die Lage der Leitgröße zumindest bezüglich des Arbeitsgerätes von einer Geräte- Ortungsvorrichtung ermittelt wird.

Derartige Spurführungssysteme sind an landwirtschaftlichen Arbeitsmaschinen, wie beispielsweise selbstfahrende Erntemaschinen oder Traktoren mit angehängten oder aufgesattelten Bearbeitungsgeräten bekannt. Diese dienen der Entlastung der Bediener der Arbeitsmaschine von der Führungsarbeit entlang einer Leitgröße. Außerdem erbringen sie insbesondere in Verbindung mit breiten Arbeitsgeräten eine bessere Auslastung der Arbeitsgeräte. Unter einer Leitgröße wird im Folgenden die Größe verstanden, die dem Bediener einer Arbeitsmaschine als optisch erkennbarer Anhaltspunkt zur genauen Spurführung der Arbeitsmaschine verwendet wird. Insbesondere handelt es sich hierbei um sichtbare Bearbeitungskanten, die bei einer Bearbeitung eines Feldstücks entstehen, wie beispielsweise eine Getreide- oder Mahdkante, eine Pflugfurche oder eine von einem Spuranreißer gezogene Spur. Diese Leitgrößen lassen sich mit von dem Fachmann bekannten Ortungsvorrichtungen automatisch erfassen.
So wird beispielsweise in der DE 197 43 884 A1 ein Traktor mit einem Pflug und einem daran angeordneten Ortungsgerät beschrieben. Das hier offenbarte Ortungsgerät ist eine berührungslos arbeitende Vorrichtung, die vorausschauend oberhalb der Pflugfurche angeordnet, diese abtastet und die ermittelte Lage der Furche zum Pflug der automatischen Führung des Traktors entlang der Furche dient. Das offenbarte Ortungsgerät tastet die Furche weit vorausschauend ab, wodurch frühzeitig eine Änderung im Verlauf der Furche detektiert und ferner eine Glättung des Furchenverlaufs erzielt wird. Bei Geradeausfahrt des Traktors und Pfluges wird die Vorderfurchenbreite, durch das Spurführungssystem geführt, exakt eingehalten. Bei Kurvenfahrten oder beim Arbeiten entlang eines Hangs, wird jedoch die eingestellte Vorderfurchenbreite, durch die sich ändernden geometrischen Verhältnisse zwischen Abtastpunkt und Pflug, verändert. Die DE 197 43 884 A1 offenbart zur Lösung dieses Problems eine automatische oder manuelle horizontale Verschiebung des Ortungsgerätes quer zur Arbeitsrichtung des Pflugs.

In der DE 19719 939 A1 wird eine automatisch lenkbare Erntemaschine offenbart, die mit einer oder mehreren Ortungsvorrichtung(en) ausgestattet ist, welche eine Bearbeitungskante in zwei unterschiedlichen Abständen vorausschauend abtastet, wobei die Bearbeitungskante zum einen weit voraus und zum anderen im Eingriffsbereich des Arbeitsorgans geortet wird. Die beiden georteten Lagen der Bearbeitungskante ermöglichen die Ermittlung einer Verlaufsrichtung der Bearbeitungskante bezüglich der Fahrtrichtung und insbesondere bezüglich der Längsachse der Erntemaschine und gleichzeitig eine Überwachung der Auslastung des Arbeitsorgans. Die ermittelte Verlaufsrichtung wird einer automatischen Lenkeinrichtung der Erntemaschine zugeführt. Diese verarbeitet diese Richtung zu einem Lenksignal und führt die Erntemaschine somit automatisch entlang der Bearbeitungskante. Es wird ferner offenbart, dass die beiden georteten Lagen der Bearbeitungskante von dem Lenkregler gewichtet verarbeitet werden. Hierbei wird vorrangig nach dem weit vorausschauenden Ortungssignal zur stabilen und glättenden Führung die Erntemaschine automatisch gelenkt und berücksichtigt erst dann, wenn die im Eingriffsbereich des Arbeitsorgans angeordnete Ortungsvorrichtung eine Überschreitung eines minimalen oder maximalen Abstandes anzeigt, das im Einzugsbereich geortete Signal vorrangig. Der Lenkregler ist daher bei der automatischen Lenkung der Emtemaschine bestrebt, ständig ein Optimum zwischen vorausschauender Spurführung und maximaler Auslastung des Arbeitsgeräts zu erreichen, wobei es insbesondere bei einer Kurvenfahrt zu einer vorrangigen Spurführung nach dem im Einzugsbereich georteten Signal kommt. Dies führt zu einer instabilen Spurführung und einem unbefriedigenden Arbeitsergebnis.

In der DE 33 13 547 C2 wird eine Hackfrucht- Erntemaschine offenbart, die aus einem Trägerfahrzeug mit zwei lenkbaren Achse und einem von diesem getragenen Ernteaggregat besteht. An dem Erntegerät sind in Fahrtrichtung voneinander beabstandet zwei mechanische Tasteinrichtungen angeordnet. Jede dieser Tasteinrichtungen ermittelt die Lage der Hackfruchtreihe bezüglich des Erntegerätes und liefert somit jeweils eine Lage der Hackfruchtreihe bezüglich der Hackfrucht- Erntemaschine. Diese Lagen werden an einen Regler oder separat an zwei getrennte Regler übermittelt. Eine jeweilige Abweichung von der Nulllage, wird in ein Lenksignal an beiden Achsen oder jeweils separat an einer Achse umgewandelt. Die automatische Spurführung der Hackfrucht- Erntemaschine auch entlang von am Hang verlaufenden Reihen wird hiermit verlustfrei erreicht, bedingt aber zwei lenkbare Achsen an einem Trägerfahrzeug.

In der US 4,607,716 wird ein nach einem ersten Spurführungssystem automatisch gelenkter Traktor mit einem daran querbeweglich angeordnetem Bearbeitungsgerät beschrieben, wobei die Querbewegung des Bearbeitungsgerätes in Abhängigkeit von einem weiteren Spurführungssystem am Bearbeitungsgerät veranlasst wird. Beim Arbeiten entlang eines Hangs oder entlang von in Kurven verlaufenden Reihenkulturen stößt dieses offenbarte automatische Führungssystem jedoch schnell an die möglichen Stellgrenzen. Eine Vermeidung von Beschädigungen an der Reihenkultur kann dann nur noch durch eine manuelle Steuerung des Traktors bewirkt werden.

Es ist nun Aufgabe der vorliegenden Erfindung eine stabile Spurführung an einer Arbeitsmaschine mit einem Arbeitsgerät zu schaffen, welche die Verfolgung einer Leitgröße entlang eines Hangs und/oder entlang einer Kurve mit optimaler Auslastung des Arbeitsgerätes ermöglicht.

Dies wird erfindungsgemäß an einem gattungsgemäßen Spurführungssystem dadurch erreicht, dass die Geräte- Ortungsvorrichtung die Leitgröße im Eingriffsbereich des Arbeitsgerätes ortet und auf das Maschinenführungssystem zur optimalen Auslastung des Arbeitsgerätes korrigierend einwirkt. Die Geräte- Ortungsvorrichtung erfasst die Leitgröße, wie beispielsweise eine Pflugfurche, direkt vor dem ersten Pflugkörper und ermittelt die direkte Auslastung des ersten Pflugkörpers. Die Arbeitsmaschine wird durch das Maschinenführungssystem sicher und stabil auf einer Spur geführt, wobei ein direkter Bezug zur Leitgröße vorteilhaft nicht oder nur mit geringer Genauigkeit bestehen muss. Durch die erfindungsgemäße direkte Erfassung der Auslastung des Arbeitsgerätes und die korrigierende Beeinflussung, kann das Maschinenführungssystem entsprechend so ausgelegt werden, dass zum einen ein kostengünstiges Maschinenführungssystem und zum anderen eine Führung der Arbeitsmaschine mit einer hohen Auslastung des Arbeitsgeräts auch unter Fahrbedingungen entlang eines Hangs und entlang einer gekrümmt verlaufenden Leitgröße entsteht.

In einer ersten Ausgestaltung der Erfindung ist das Arbeitsgerät zumindest quer zur Längsachse der Arbeitsmaschine beweglich angeordnet und die von der Gerät- Ortungsvorrichtung geortete Lage der Leitgröße wird zumindest von wenigstens einem Geräteführungssystem zur Steuerung der optimalen Auslastung des Arbeitsgerätes verwendet. Das Arbeitsgerät kann hierdurch direkt an die von der Geräte- Ortungsvorrichtung ermittelte Lage der Leitgröße innerhalb des möglichen Stellbereichs und unabhängig von der Ausrichtung der Arbeitsmaschine angepasst werden. Ferner wirkt sich durch diese Entkopplung eine Änderung der Ausrichtung der Arbeitsmaschine beispielsweise infolge einer vorausliegenden Änderung des Verlaufs der Leitgröße, nicht auf die optimal eingestellte Auslastung des Arbeitsgerätes aus. Weiterhin wird eine schnellere Reaktion des Arbeitsgerätes möglich und somit vorteilhaft eine schnellerer Optimierung der Auslastung des Arbeitsgerätes, auch auf kleine Änderungen im Verlauf der Leitgröße erzielt. Des Weiteren kann bei einer automatischen Führung des Arbeitsgerätes, der Stellbereich gegenüber der Arbeitsmaschine vorteilhaft geringer bemessen werden, da größere Änderungen im Verlauf der Leitgröße an das Maschinenführungssystem übertragen und von diesem korrigiert werden.

In einer weiteren Ausgestaltung der Erfindung wird die Position der Arbeitsmaschine auf einem Bearbeitungsfeld mit einer Navigationseinrichtung ermittelt, wobei das Maschinenführungssystem die Arbeitsmaschine entlang einer geplanten Route in Abhängigkeit von der ermittelten Position führt. Die Verwendung derartiger Systeme erbringt für die Führung der Arbeitsmaschine die Möglichkeit der weit vorausschauenden Führung und somit vorteilhaft ein stabiles Spurführungssystem. Es kann vorteilhaft durch die geplante Route eine Änderung im Verlauf vorausschauend erkannt und durch eine rechtzeitige Einleitung einer Lenkbewegung, eine notwendige Fahrtrichtungsänderung entsprechende stabil ausgeführt werden. Durch die erfindungsgemäße Kopplung mit der Geräte- Ortungsvorrichtung beziehungsweise mit dem Geräteführungssystem, wird vorteilhaft ein direkter Bezug der Leitgröße zur geplanten Route hergestellt.

In vorteilhafter Weise wird die Lage der Leitgröße bezüglich der Arbeitsmaschine mit wenigstens einer Maschinen- Ortungsvorrichtung detektiert, wobei das Maschinenführungssystem die Arbeitsmaschine entlang der Leitgröße in Abhängigkeit dieser georteten Lage führt. Vorteilhaft tastet die Maschinen- Ortungsvorrichtung die Leitgröße vorrausschauend ab und richtet die Arbeitsmaschine entsprechende frühzeitig auf die Leitgröße aus. Eine entsprechende stabile Führung entlang der Leitgröße wird hierdurch unter allen Arbeitsbedingungen sichergestellt. Durch die erfindungsgemäße Kopplung mit der Geräte- Ortungsvorrichtung, kann die Maschinen- Ortungsvorrichtung vorteilhaft mit einer geringeren Genauigkeit bei der Erkennung der Lage der Leitgröße ausgestattet werden, wodurch die Kosten für diese Maschinen- Ortungsvorrichtung entsprechend geringer ausfallen.

In einer vorteilhaften Weiterbildung der Erfindung wirkt die Geräte- Ortungsvorrichtung und/oder das Geräteführungssystem auf das Maschinenführungssystem korrigierend ein, wenn der mögliche Erfassungsbereich der Geräte- Ortungsvorrichtung und/oder der Stellbereich des Geräteführungssystems nicht ausreicht, um eine Änderung der georteten Lage der Leitgröße zu erfassen und/oder darauf reagieren zu können. Verlässt die Leitgröße den Erfassungsbereich der Geräte- Ortungsvorrichtung oder gerät das Stellelement des Geräteführungssystems an einen Anschlag, wird vorteilhaft das Maschinenführungssystem und in Folge davon die Fahrtrichtung der Arbeitsmaschine so beeinflusst, dass die Leitgröße von dem Geräteführungssystem erfasst werden kann und/oder das Stellelement einen Anschlag im Stellbereich wieder verlässt. Vorteilhaft wird hierdurch erreicht, dass die Leitgröße den Erfassungsbereich der Geräte-Ortungsvorrichtung nie verlässt und eine sichere Erkennung der Leitgröße sichergestellt. Ferner wird eine stabile Spurführung des Arbeitsgerätes und der Arbeitsmaschine entlang einer Leitgröße hierdurch erzielt, da die Einstellung des Arbeitsgeräts nie an eine Grenze des Stellbereichs gelangen kann.

In einer weiteren Ausgestaltung der Erfindung wirkt die Geräte- Ortungsvorrichtung und/oder das Geräteführungssystem auf das Maschinenführungssystem korrigierend ein, wenn die Geräte- Ortungsvorrichtung und/oder das Geräteführungssystem über einen längeren Zeitraum mit einer von der Mittellage abweichenden Lage der Leitgröße und/oder mit einer derartigen abweichenden Einstellung betrieben wird. Eine Abweichung über einen längeren Zeitraum entsteht überwiegend bei dem Arbeiten entlang eines Hangs oder beim Durchfahren einer Kurve, dies wird vorteilhaft durch eine Korrektur der Ausrichtung der Arbeitsmaschine bezüglich der Leitgröße behoben. Hierdurch stellt sich dann auch bei einer Fahrt entlang eines Hangs oder in einer langgezogenen Kurve, die ungefähre Mittellage des Arbeitsgerätes zur Arbeitsmaschine ein, wodurch dem Geräteführungssystem vorteilhaft in jede Richtung ein maximaler Stellbereich zur Steuerung der optimalen Auslastung und Anpassung an Änderungen der Lage der Leitgröße zur Verfügung steht. Ferner wird durch die Vorgabe eines Zeitraums, eine instabile und unruhige Führung der Arbeitsmaschine erzielt.

In einer Weiterbildung der Erfindung bewirkt die für das Maschinenführungssystem maßgebliche Führungsgröße in Abhängigkeit von der von der Geräte- Ortungsvorrichtung und/oder dem Geräteführungssystem veranlassten Korrektur, eine Korrektur dieser Führungsgröße. Hierdurch wird die durch die infolge der erfindungsgemäßen Beeinflussung anstehende Korrektur der Ausrichtung der Arbeitsmaschine aufgehoben und eine Stabilisierung des Maschinenführungssystems erzielt. Insbesondere bei einem längeren Arbeiten entlang eines Hangs oder beim Durchfahren einer längeren Kurve wird vorteilhaft hierdurch der Erfassungsbereich der Maschinen- Ortungsvorrichtung oder eine geplante Route selbst um den ständig anstehenden Korrekturfaktor korrigiert. Vorteilhaft wird die noch abzufahrende Route auf dem verbleibenden Bearbeitungsfeld neu berechnet. Nachfolgende Bearbeitungen können dann vorteilhaft ohne erfindungsgemäße Korrektur der Maschinenführung durchgeführt. Eine ständige Abweichung der geplanten Route von der Leitgröße wird vorteilhaft hierdurch ausgeglichen.

In einer weiteren Ausgestaltung der Erfindung verstellt das Geräteführungssystem, bei einer von der Mittellage abweichenden Einstellung des Arbeitsgerätes, die Arbeitsbreite PB des Arbeitsgerätes derart, dass die bei der Bearbeitung neu erzeugte Leitgröße annähernd in einem Abstand von der Normalarbeitsbreite PAN zur nächsten parallel geplanten Route verläuft. Hierdurch wird eine Abweichung der tatsächlichen Lage der Leitgröße von der bei der Planung der Route angenommenen Lage vorteilhaft ausgeglichen und dies ohne das eine Korrektur oder Neuberechnung der Route stattfinden muss.

Anhand der beigefügten Zeichnungen soll die Erfindung näher erläutert werden. Es zeigen:
- Figur 1 eine Draufsicht auf einen Traktor mit einem angehängten Pflug auf einem Bearbeitungsfeld
- Figur 2 eine Draufsicht auf einen Traktor mit einem angehängten Mähwerk und
- Figur 3 eine Draufsicht auf einen Mähdrescher mit einer Geräte- Ortungsvorrichtung

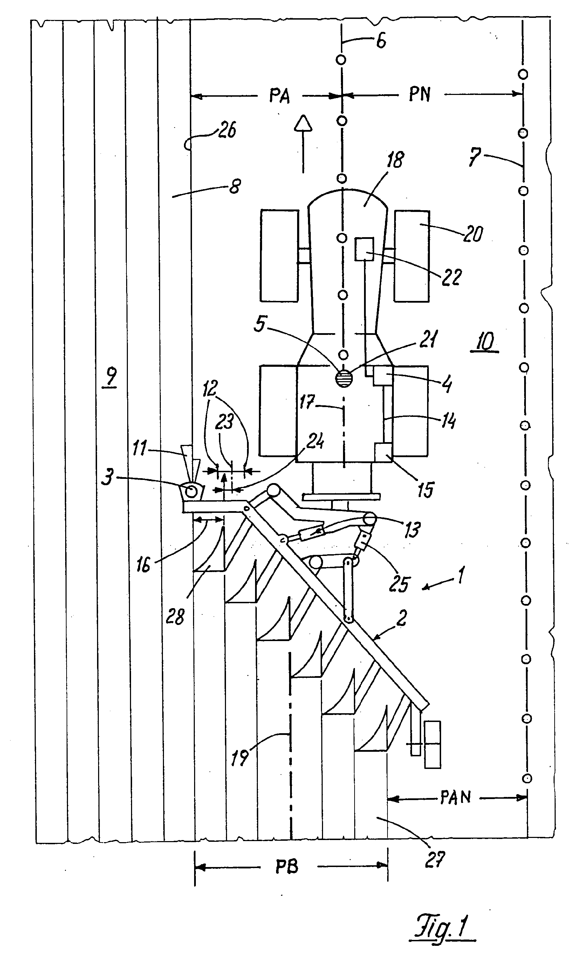

In der Figur 1 wird eine Draufsicht auf einen Traktor 18 mit einem angehängten Pflug 2 auf einem Bearbeitungsfeld 9,10 gezeigt. Der Traktor 18 wird von einem Maschinenführungssystem 4 entlang einer geplanten Route 6 spurgeführt. Hierzu wird die aktuelle Position 21 des Traktors 18 mittels einer dem Fachmann bekannten Navigationseinrichtung 5, wie beispielsweise einer Satellitennavigationseinrichtung, bezüglich des Bearbeitungsfeldes 9,10 ermittelt und mit einer zuvor geplanten Route 6 verglichen. Bei einer Positionsabweichung wird eine vorhandene automatische Lenkeinrichtung 22 von dem Maschinenführungssystem 4 zu einer korrigierenden Lenkbewegung an der Lenkachse 20 veranlasst. Der gezeigte Traktor 18 ist vorderachsgelenkt, eine Ausstattung mit Allradlenkung ist ebenfalls verwendbar.
Das Maschinenführungssystem 4 beinhaltet selbst ein Routenplanungssystem oder ist mit einem solchen verbunden. Dieses generiert vor der Bearbeitung des Bearbeitungsfeldes 10 mit dem Pflug 2, in Abhängigkeit einer bekannten Arbeitsbreite PN des Pfluges 2, eine optimale abzufahrende Spur für das gesamte Bearbeitungsfeld 10. Der Fachmann kann hierfür ein ihm bekanntes System verwenden. In der Figur 1 ist ein Teilausschnitt des Bearbeitungsfeldes 9,10 dargestellt, welches sich in ein schon gepflügtes Bearbeitungsfeld 9 und ein ungepflügtes Bearbeitungsfeld 10 aufteilt. Die Teilung des Bearbeitungsfeldes 9,10 wird durch den Verlauf der Furchen 8 und 27 gebildet. Neben der aktuellen Route 6 wird eine parallel zu dieser verlaufende weitere geplante Route 7 gezeigt. Der Pflug 2 ist rückwärtig an dem Traktor 18 angeordnet, wobei das Pflügen im sogenannten Onland- Betrieb durchgeführt wird. Ferner kann der Pflug 2 in seiner Arbeitsbreite PB verstellt und gegenüber der Längsachse 17 des Traktors 18 quer verschoben werden. Hierzu ist der Pflug 2 mit einem ersten Hubzylinder 13 und einem weiteren Hubzylinder 25 ausgestattet. Ein im Traktor 18 angeordnetes Geräteführungssystem 15 ermöglicht dem Bediener der Arbeitsmaschine 1 die Einstellung des Pflugs 2 manuell vomehmen zu können. An dem Pflug 2 ist eine Geräte- Ortungsvorrichtung 3 direkt oberhalb der Furchenwand 26 angeordnet. Diese tastet die Lage der Furche 8 bezüglich des Pflugs 2 berührungslos ab und liefert ein entsprechendes Signal an das Geräteführungssystem 15. Zur optimalen Auslastung des Arbeitsgerätes 2 und hier insbesondere zur optimalen Einstellung der Vorderfurchenbreite 16, steuert das Geräteführungssystem 15 die Ausrichtung und den Abstand der Längsachse 19 des Pflugs 2 bezüglich der Längsachse des Traktors 18 mittels der beiden Hubzylinder 13 und 25. Dem Geräteführungssystem 15 steht zur Einstellung der Vorderfurchenbreite 16 ein Stellbereich 12 zur Verfügung, wobei vorrangig diese Einstellung mit dem Hubzylinder 13 erfolgt. Die Arbeitsbreite PB lässt sich mit dem Hubzylinder 25 einstellen, wobei eine Verstellung nur mit einem Hubzylinder 13 oder 25, eine Verstellung beider genannter Einstellgrößen bewirkt.
In der dargestellten Einstellung des Pflugs 2, wird der Pflug 2 mit einer optimalen Vorderfurchenbreite 16 und mit einer größeren Arbeitsbreite PB, als die bei der Planung der Route 6,7 angenommen Größe der Normalarbeitsbreite PN, betrieben. Ferner wird mit einem Versatz 24 der Längsachse 19 des Pflugs 2, gegenüber der Längsachse 17 des Traktors 18 gepflügt. Die Mittellage 23 des Stellbereichs 12 ist als Grundeinstellung des Pflugs 2 definiert und ermöglicht einen von dieser Lage nach beiden Seiten hin gleich großen Stellweg/Versatz 24. Am Ende einer Bearbeitungsspur wird diese Mittellage 23 von dem Geräteführungssystem 15 automatisch voreingestellt.
Die Lage der Furchenwand 26 wird als Leitgröße, von einer berührungslos arbeitenden Geräte- Ortungsvorrichtung 3 mittels eines in einer Ebene verschwenkten Laserstrahls detektiert. Von dem Geräteführungssystem 15 wird in Abhängigkeit von der ermittelten Lage, ein entsprechender Versatz 24 zur optimalen Einstellung der Vorderfurchenbreite 16 eingestellt. Die Lage der Leitgröße kann auch durch andere dem Fachmann an sich bekannte Ortungsvorrichtung abgetastet werden. Hierzu stehen weitere berührende beziehungsweise berührungslose arbeitende Ortungsvorrichtungen in unterschiedlichen Ausführungen zur Verfügung. Dabei ist es besonders für die erfindungsgemäße Verwendung vorteilhaft, wenn der Erfassungsbereich 11 der Geräte- Ortungsvorrichtung 3 die Lage der Leitgröße 26 unmittelbar oder unmittelbar vorrausschauend vor dem Eingriff des ersten Pflugkörpers 28 erfasst. Hierdurch haben unterschiedliche Ausrichtungen der Längsachse 19 des Pfluges 2 gegenüber der Furche 8, beispielsweise beim Arbeiten entlang eines Hangs oder entlang einer Kurve, keinen Einfluss auf die ermittelte Lage der Leitgröße. Eine optimale Vorderfurchenbreite 16 kann hierdurch unter allen Arbeitsbedingungen eingestellt werden.
Die geplante Route 6 wird in der Darstellung von dem Maschinenführungssystem 4 exakt verfolgt. Dies ist an der auf der geplanten Route 6 liegenden aktuellen Position 21 des Traktors 18 erkennbar. Die geplante Route 6 liegt in einem Abstand PA von der Furchenwand 26 entfernt und ist in der Darstellung um den Versatz 24 größer als bei normaler Ausrichtung des Pfluges 2 in der Mittellage 23. Von dem Geräteführungssystem 15 wird erfindungsgemäß eine optimale Auslastung des Pfluges 2 durch den eingestellten Versatz 24 erreicht und außerdem eine größere Arbeitsbreite PB am Pflug 2 eingestellt, so dass vorteilhaft die neue Furche 27 in einem Abstand PAN zur geplanten Route 7 liegt. Dieser Abstand PAN entspricht in etwa dem Abstand der Mittellage 23 von der Längsachse 17 des Traktors 18 zuzüglich der Arbeitsbreite des ersten Pflugkörpers 28 und ermöglicht somit bei der nachfolgenden Bearbeitung, entlang der Route 7, erfindungsgemäß eine Grundeinstellung des Pfluges 2 mit einer Arbeitsbreite PN und ohne einen Versatz 24 von der Mittellage 23.
Das Geräteführungssystem 15 steht über eine Verbindung 14, beispielsweise einem Daten- Bussystem, mit dem Maschinenführungssystem 4 erfindungsgemäß in Kontakt. Überschreitet beispielsweise der erforderliche eingestellte Versatz 24 den möglichen Stellbereich 12, so wird erfindungsgemäß auf das Maschinenführungssystem 4 von der Geräte- Ortungsvorrichtung 3 direkt und/oder von dem Geräteführungssystem 15 derart eingewirkt, das der Traktor 18 von der geplanten Route 6,7 so abweicht, dass der erforderte Versatz 24, zur optimalen Einstellung der Vorderfurchenbreite 16 eingestellt werden kann. Hierzu wird dann der Traktor 18 mit seiner Längsachse 17 auf einer parallel zur geplanten Route 6 verlaufenden Spur, mit der erfindungsgemäßen Korrektur so lange geführt, bis von der Geräte- Ortungsvorrichtung 3 eine Änderung der Lage der Leitgröße "Furche 8" in einer entsprechend entgegengesetzten Richtung detektiert wird. Diese erfindungsgemäße Korrektur der Traktorfahrspur, kann direkt bei einer Abweichung der Pflugeinstellung aus der Mittellage 23 oder erst bei der Überschreitung eines vorgegebenen Versatzes 24 oder beim Erreichen der Endlagen des Stellbereiches 12 erfolgen. Die automatisch Einstellung der Arbeitsbreite PB des Pflugs 2 richtet sich erfindungsgemäß nach der Größe und Richtung des Versatzes 24. So wird bei einer dichter an der geplanten Route 6 verlaufenden Furche 8 eine geringere Arbeitsbreite PB des Pfluges 2 eingestellt als bei einem auftretenden Versatz 24, der wie gezeigt einen größeren Abstand der Furche 8 von der geplanten Route 6 anzeigt. Durch die erfindungsgemäße Einstellung der Arbeitsbreite PB des Pflugs 2 nähert das Geräteführungssystem die neue Furche 27 in einem Normalabstand PAN zur nächsten geplanten Route 7 an.
Das erfindungsgemäße Spurführungssystem arbeitet auch dann optimal, wenn es zu einer von dem Traktor 18 oder dem Maschinenführungssystem 4 verursachten Abweichung des Traktor 18 von der geplanten Route 6 kommt. Die Geräte- Ortungsvorrichtung 3 erkennt diese Abweichung durch eine veränderte Lage des Pfluges 2 bezüglich der Furche 8 und das Geräteführungssystem 15 regelt diese Änderung durch eine veränderte Einstellung des Versatzes 24 und eventuell auch der Arbeitsbreite PB entsprechende aus.

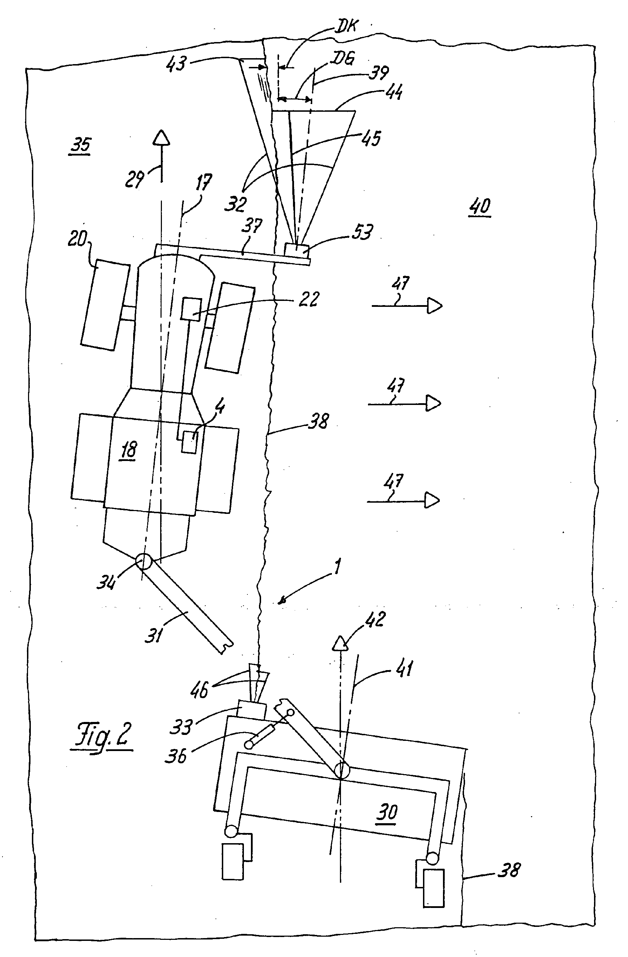

Eine weitere Ausgestaltung der Erfindung wird in der Figur 2 anhand einer Draufsicht auf einen Traktor 18 mit einem daran angehängten Mähwerk 30 gezeigt. Der Traktor 18 wird von einem Maschinenführungssystem 4 entlang der Mahdkante 38 spurgeführt. Hierzu erhält das System 4 ein Signal von der Maschinen- Ortungsvorrichtung 53 und steht erfindungsgemäß auch mit der Geräte- Ortungsvorrichtung 33 in Verbindung. Die Maschinen- Ortungsvorrichtung 53 zeigt dem Maschinenführungssystem 4 den Verlauf der Mahdkante 38 vorrauschauend und die Geräte- Ortungsvorrichtung 33 die Lage der Mahdkante 38 bezüglich des Mähwerkes 30 an. Die Ausrichtung der Ortungsvorrichtungen 33;53 an dem Traktor 18 beziehungsweise am Mähwerk 30 wird so vorgenommen, dass bei optimaler Auslastung des Mähwerks 30 und bei paralleler Ausrichtung der Längsachsen 17 und 41 und bei geradeaus verlaufender Mahdkante 38 in der Ebene, die Mahdkante 38 jeweils mittig im Erfassungsbereich 32;46 geortet wird. Die gezeigten Ortungsvorrichtungen 33;53 sind Laserscanner, die mittels eines in einer Ebene innerhalb des Erfassungsbereichs 32;46 verschwenkten Abtaststrahls 45, bei korrekter Anbringung und Ausrichtung, die Entfernung der Ortungsvorrichtung 33;53 bezüglich des gemähten Feldes 35 und des ungemähten Feldes 40 ermitteln. Anhand eines Entfernungssprungs wird die Lage der Mahdkante 38 erkannt und je nach Definition, ein entsprechendes Sensorsignal in Bezug auf die Bereichsmitte 39 generiert. Eine besonders sichere Erkennung der Leitgröße, wie hier die Mahdkante 38, wird von der beschriebenen Art von Ortungsvorrichtung, durch eine direkte vertikal oberhalb der Leitgröße liegende Anbringung und einem von dort zur Leitgröße hin ausgerichteten Erfassungsbereich 32;46 erzielt. Hierdurch entsteht der ausgewertete Entfernungssprung innerhalb eines geringen Schwenkbereichs des Abtaststrahl 45.

Der Traktor 18 fährt beim Mähen in einem Abstand parallel entlang der Mahdkante 38, so dass zur Herbeiführung dieser optimalen Anbringung der Maschinen- Ortungsvorrichtung 53, ein Haltearm 37 zur Aufnahme der Maschinen- Ortungsvorrichtung 53 notwendig ist. Dieser kann gegenüber dem Traktor 18 zur Einstellung der optimalen Ausrichtung und zur Anpassung an unterschiedliche Mahdkanten 38 beweglich angelenkt sein, wobei die Maschinen- Ortungsvorrichtung 53 auch selbst gegenüber dem Haltearm 37 verschieb- und schwenkbar angebracht werden kann.
Das Mähwerk 30 wird über eine Deichsel 31 von dem Traktor entlang der Mahdkante 38 gezogen. Die Winkellage der Deichsel 31 gegenüber dem Mähwerk 30 kann von einem Hubzylinder 36 verstellt werden und ermöglicht eine Einstellung des Abstandes der Längsachse des Traktors 18 von der Längsachse 41 des Mähwerks 30. Dieser Abstand ist ferner von der benötigten Zugleistung für das Mähwerk 30 abhängig. Erhöht sich diese, schwenkt das Mähwerk 30 um die vertikal stehende Achse in der Koppelstelle 34 und dieser Abstand verringert sich.
In dem dargestellten Arbeitsbetrieb der Arbeitsmaschine 1, wird auf einem Feld 35;40 mit einem in Richtung der Pfeile 47 ansteigenden Geländeprofil gearbeitet. Zur Überwindung der Hangabtriebskräfte stellen sich die Längsachsen 17,41 von Traktor 18 und Mähwerk 30 gegenüber der Fahrtrichtung 29 und 42 unterschiedlich ein, wobei die Richtungen der Längsachsen 17 und 41 nicht übereinstimmend sein müssen. Das erfindungsgemäße Spurführungssystem bewirkt nun, dass sich die Arbeitsmaschine 1 unter Beibehaltung der optimalen Auslastung des Mähwerks 30 entlang des Hangs spurgeführt wird. Die gesamte Arbeitsmaschine 1 verfolgt die Mahdkante 38 hierfür um den Erfassungsbereich 46 und insbesondere um die definierte Mittellage des Erfassungsbereichs 46 der Geräte- Ortungsvorrichtung 33 in Richtung der Pfeile 47 gedreht. Dafür wirkt die Geräte- Ortungsvorrichtung 33 erfindungsgemäß auf das Maschinenführungssystem 4 ein und bewirkt, das die definiert Bezugslage der Maschinen- Ortungsvorrichtung 53 um den Betrag DG hangabwärts als Sollwert definiert wird. Dies kann in der Maschinen- Ortungsvorrichtung 53 selbst oder auch von dem Maschinenführungssystem 4 korrigierend über dem Fachmann bekannte Mittel veranlasst werden. Der Erfassungsbereich 32 und die Maschinen- Ortungsvorrichtung 53 werden durch diese Korrektur hangaufwärts über das ungemähte Feld 40 verlagert. Der Abtastbereich Fern 43 wird hierdurch verkleinert und der Abtastbereich Nah 44 vergrößert. Diese Verlagerung kann, bei einer entsprechenden Ausgestaltung der Anbringung der Maschinen- Ortungsvorrichtung 53 am Haltearm 37, durch eine Verdrehung der Maschinen- Ortungsvorrichtung 53 mit der Bereichsmitte 39 zur Mahdkante 38 hin beziehungsweise auch durch eine Verschiebung der Maschinen- Ortungsvorrichtung 53 auf dem Haltearm 37 zum Traktor 18 hin korrigiert werden, wobei dann eine entsprechende Erfassung dieser Korrektur notwendig ist. Von der Geräte- Ortungsvorrichtung 33 kann die zuvor beschriebene Korrektur der Anbringung der Maschinen- Ortungsvorrichtung 53, auch direkt zur erfindungsgemäßen Einwirkung auf das Maschinenführungssystem 4 Verwendung finden. Hierbei wird die Bereichsmitte 39 des Erfassungsbereichs 32 der Maschinen- Ortungsvorrichtung 53 direkt durch die Geräte-Ortungsvorrichtung 33 auf die Leitgröße ausgerichtet. Die Maschinen- Ortungsvorrichtung 53 erkennt dann dies als eine Änderung der Lage der Leitgröße 38 und wirkt dann automatisch entsprechend auf die Lenkung ein. Die erforderliche Korrektur der Lage des Traktors 18 zur Mahdkante 38 wird automatisch hierdurch erzeugt, wobei vorteilhaft der Erfassungsbereich 32 der Maschinen- Ortungsvorrichtung 53 optimal ausgerichtet bleibt und diese somit die Mahdkante 38 nie verlieren kann.
Die aktuelle Lage der Leitgröße "Mahdkante 38" ist wie gezeigt um den Betrag DG und zusätzlich um einen weiteren Betrag DK von der Bereichsmitte 39 verlagert. Dieser Betrag DK entsteht durch eine Änderung in der Lage der Mahdkante 38. Diese Änderung wird von dem Maschinenführungssystem 4 als solche erkannt und durch ein Lenksignal an die automatischen Lenkeinrichtung 22 in eine Änderung des Abstandes zur Mahdkante 38 umgesetzt. In einer weiteren Ausgestaltung findet diese Umsetzung erst verzögert statt, so dass die Auslastung des Mähwerks 30 hierdurch nicht verändert wird. Ferner kann dieser Betrag DK zu dem Betrag DG addiert werden. Die Geräte- Ortungsvorrichtung 33 erkennt diese Änderung im Verlauf der Mahdkante 38 später ebenfalls und korrigiert dann erfindungsgemäß den Betrag DG entsprechend. Eine Veränderung des Abstandes des Traktors 18 von der Mahdkante 38 wird dann hierauf entsprechend von dem Maschinenführungssystem 4 ausgeführt. Es ist weiterhin auch möglich, den Hubzylinder 36 in Verbindung mit dem von der Geräte- Ortungsvorrichtung 33 erkannten Lage der Leitgröße im Eingriffbereich des Mähwerks 30, zur Verstellung des Mähwerks 30 bezüglich der Mahdkante 38 zur optimalen Auslastung desselben zu verwenden. Die aktuelle Einstellung wird beispielsweise an der Stellung der Kolbenstange des Hubzylinders 36 ermittelt und bei einer Überschreitung eines definierten Stellwegs von einer Mittelstellung, erfindungsgemäß auf das Maschinenführungssystem 4 eingewirkt. Insbesondere entlang einer Kurve wird hierdurch eine optimale Auslastung des Mähwerks 30 erreicht. Ferner kann auch die Stellung der Deichsel 31 bezüglich des Traktor 18 an der Koppelstelle 34 ermittelt und von dem erfindungsgemäßen Spurführungssystem ausgewertet und berücksichtigt werden.
Es ergibt sich für einen Fachmann in naheliegender Weise, dass das erfindungsgemäße Spurführungssystem auch auf selbstfahrende Mähfahrzeuge mit einem oder mehreren daran angeordneten Mähwerken 30 zu übertagen ist. Ein Mäh- Trägerfahrzeug wird dann von einem Maschinenführungssystem auf dem Feld spurgeführt, wobei dann wenigstens eine Geräte- Ortungsvorrichtung den Bezug zu wenigstens einer Mahdkante herstellt. An einem solchen Mähfahrzeug mit mehreren in Fahrtrichtung voneinander beabstandeten Mähwerken 30 entstehen während des Mähens mehrere Mahdkanten, die sich beim Mähen entlang einer Kurve beziehungsweise entlang eines Hangs gegeneinander verlagern. Zur Erkennung der Lagen der Mahdkanten werden mehrere Geräte- Ortungsvorrichtungen eingesetzt und von einer Geräteführungseinrichtung die einzelnen Mähwerke bezüglich der Mähkanten zur optimalen Auslastung der Mähwerke entsprechend geführt und auf das Maschinenführungssystem hierzu erfindungsgemäß eingewirkt. Insbesondere bewirkt die erfindungsgemäße Einwirkung eine Optimierung der Gesamtschnittbreite und eine sichere Führung des Mähfahrzeugs entlang der Mähkante 38.

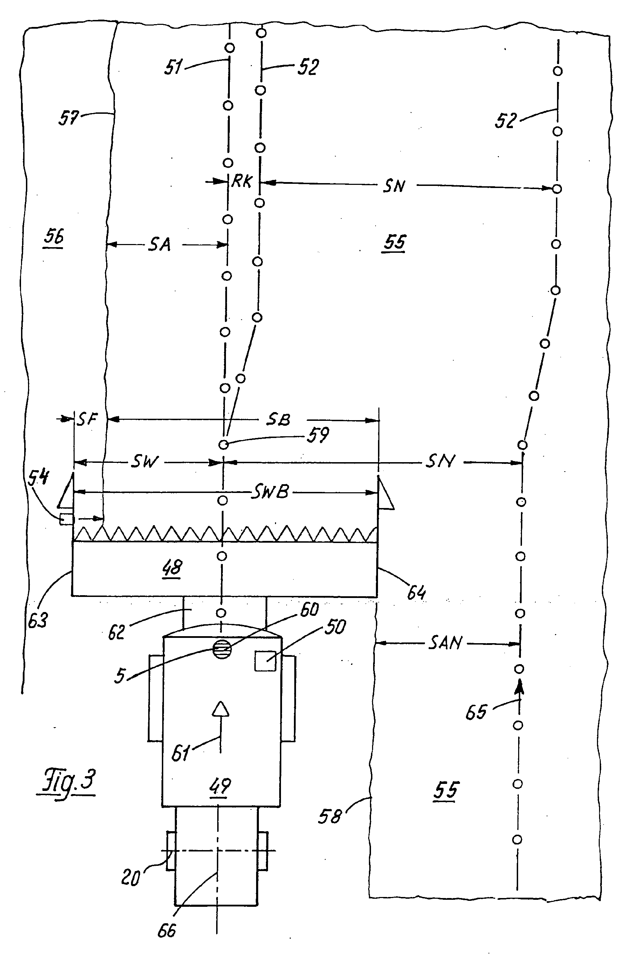

Das erfindungsgemäße Spurführungssystem erbringt auch bei einer Verwendung an einem Mähdrescher 49 eine optimale Auslastung des Arbeitsgerätes 48. Eine derartige Ausgestaltung der Erfindung, wird in der Figur 3 gezeigt. Hier wird eine Draufsicht auf einen Mähdrescher 49 mit einer Geräte- Ortungsvorrichtung 54 dargestellt. Der Mähdrescher 49 ist mit einer Navigationseinrichtung 5 ausgestattet. Diese ermittelt die Position 60 des Mähdreschers 49 auf dem Feld 55;56 und ermöglicht ferner eine Bestimmung der Lage des Mähdreschers 49 bezüglich einer zuvor geplanten Route 51. Diese Route 51 wurde zuvor von einem auf dem Mähdrescher 49 installierten Routenplanungssystem generiert und wird durch ein auf dem Mähdrescher 49 vorhandenes Maschinenführungssystem 50 abgefahren. Dabei bewirkt eine Abweichung der aktuellen Position 60 von der Route 51, eine ausgleichende Korrektur der Ausrichtung des Mähdreschers 49 mittels eines von dem Maschinenführungssystem 50 veranlassten Lenksignals an eine vorhandene automatische Lenkeinrichtung. Die in Fahrtrichtung 61 hinten liegende Lenkachse 20 wird hierzu angesteuert. In Fahrtrichtung 61 vorausliegend wird von dem Mähdrescher 49 ein an einem Einzugskanal 62 angeordnetes Schneidwerk 48 getragen. Dieses schneidet von dem Getreidefeld 55 auf einer Breite SB Getreide ab und führt es auf die Breite des Einzugskanals 62 zusammen. An der linken Seitenwand 63 des Schneidwerks 48 ist im Eingriffsbereich die Geräte- Ortungsvorrichtung 54 angeordnet. Diese tastet den Abstand SF der Seitenwand zur Getreidekante 57 ab. Hierzu kann der Fachmann eine bekannte berührende oder berührungslos arbeitende Ortungsvorrichtung verwenden.
Anhand der bekannten Arbeitsbreite SWB des Schneidwerks 48, kann die aktuelle Arbeitsbreite SB und ferner der Abstand SA der Getreidekante 57 bezüglich der aktuellen Position 60 des Mähdreschers 49 und zur geplanten Route 51 ermittelt werden. Weiterhin lässt sich auch der Abstand SW der linken Scheidwerkswand 63 und der Längsachse des Schneidwerks 48 aus den bekannten Größen des Mähdreschers 49 und dem Abstand SF bestimmen. Für die Routenplanung wird eine Normarbeitsbreite SN, die etwas kleiner als die absolute Arbeitsbreite SWB des Schneidwerks 48 festgelegt ist, verwendet. Kurzeitig auftretende Änderungen im Verlauf der Getreidekante 57 können somit ohne eine entsprechend korrigierende Lenkbewegung ausgeglichen werden. Durch die Arbeit des Mähdreschers 49 wird die vorhandene Getreidekante 57 um die aktuelle Arbeitsbreite SB quer zur Fahrtrichtung 61 in eine neue Getreidekante 58 verlagert. Hierbei liegt die neue Getreidekante 58, bei korrekter Verfolgung des Mähdreschers 49 in der Ebene auf der geplanten Route 51, in einem Abstand SAN von der noch abzufahrenden Route 51 entfernt, wobei dieser Abstand SAN der Normarbeitsbreite SN minus der Hälfte der Schneidwerksbreite SWB entspricht. Bei der nächsten Entlangfahrt an der neuen Getreidekante 58 in der geplanten Routenrichtung 65, wird unabhängig von dem aktuellen Abstand SA mit einer Arbeitsbreite SB der Normarbeitsbreite SN geerntet. Findet jedoch ein Ernten in Hanglage oder entlang einer Kurve statt, ändert sich jedoch der hierbei erzeugte Abstand SAN. Der Mähdrescher 49 dreht sich hierbei bekanntlich zur Überwindung der Hangabtriebskräfte um eine im Schwerpunkt des Mähderschers 49 liegende vertikale Achse, so dass die Richtung der Längsachse 66 des Mähdreschers 49 gegenüber der Fahrtrichtung 61 des Mähdreschers 49 verdreht wird. Eine Verlagerung der Schneidwerkswände 63,64 bezüglich der geplanten Route 51 und der aktuellen Position 60 des Mähdreschers 49 sind die Folge. Dies verursacht wiederum eine Veränderung des Abstandes SAN. Bei der nächsten Entlangfahrt an der neu erzeugten Getreidekante 58, wird diese Abweichung von der Geräte- Ortungsvorrichtung 54 durch eine Veränderung des Abstand SF erkannt und erfindungsgemäß auf das Maschinenführungssystem 50 derart eingewirkt, dass mit einer optimalen Normarbeitsbreite SN geerntet wird. Diese Änderung vollzieht sich unmittelbar oder es wird hierzu erfindungsgemäß über eine definierte Zeit beziehungsweise einen definierten Fahrweg der Abstand SF aufgezeichnet und aus diesen Daten eine mittlere Abweichung von der Normarbeitsbreite SN berechnet. Diese mittlere Abweichung wird dann zur erfindungsgemäßen Korrektur der abgefahrenen Route 51 beziehungsweise zur Planung einer neuen Route 52 mit einem entsprechenden Versatz RK zur alten Route 51 von dem Routenplanungssystem oder Maschinenführungssystem 50 verwendet. Die nunmehr neu geplante, parallel im Abstand SN zur Route 51 verlaufende Route 52, weist dann ab der Höhe der Korrekturstelle 59 einen entsprechenden Versatz RK auf, wobei der jeweilige Übergang bei den nachfolgenden parallelverlaufenden Routen jeweils geglättet geplant werden kann. Es ist ferner in einer weiteren Ausgestaltung der Erfindung denkbar, dass die Geräte- Ortungsvorrichtung 55 direkt auf das Maschinenführungssystem 50 zur Korrektur der Arbeitsbreite SB einwirkt oder erst nach einem definierten Fahrweg beziehungsweise nach einer definierten Fahrzeit die Route 51 neu berechnet beziehungsweise um den Betrag RK korrigiert wird. Hierdurch wird der Verlauf der geplanten Route 51 an die momentan herrschenden Bodenverhältnisse und den Arbeitsbedingungen entsprechend den von der Geräte- Ortungsvorrichtung 54 ermittelten Lage der Leitgröße "Getreidekante 57" angepasst, wobei eine automatische Spurführung des Mähdreschers 49 mit einer optimalen Auslastung und stabilen Führung entlang der Getreidekante 57 selbstlernend durchgeführt wird.

Es liegt im Ermessen des einschlägigen Fachmanns, die beschriebenen Ausführungsbeispiele auf weitere landwirtschaftliche Arbeitsmaschinen 1 zu übertragen. Auch sind verschiedene Steuerungen zur Beeinflussung der Lage eines Arbeitsgerätes 2,30,48 bezüglich einer Zugmaschine, Traktors 18 oder Trägerfahrzeugs bekannt. Insbesondere stehen hierfür Parallelrahmenführungen am Arbeitsgerät, Deichselführungen oder Unterlenkersteuerungen zur Verfügung. Weiterhin liegt es im ermessen eines Fachmanns die Ausstattung der Arbeitsmaschine 1 mit bekannten Ortungsvorrichtungen 3,33,53,54 anhand der zu erfassenden Leitgröße auszuwählen und eine vorausschauende Maschinenführung mit dem entsprechend geeigneten Routenplanungssystem, Navigationssystem beziehungsweise der geeigneten Maschinen- Ortungsvorrichtung 53 zu wählen. Eine Kombination und/oder Zusammenfassung der einzelnen Systeme beziehungsweise Vorrichtungen ist ferner ohne besonders erfinderisch tätig zu werden, denkbar.

### Bezugszeichenliste:

- 1: Arbeitsmaschine
- 2: Pflug
- 3: Geräte- Ortungsvorrichtung
- 4: Maschinenführungssystem
- 5: Navigationseinrichtung
- 6: geplante Route
- 7: parallele geplante Route
- 8: Furche
- 9: gepflügtes Bearbeitungsfeld
- 10: ungepflügtes Bearbeitungsfeld
- 11: Erfassungsbereich
- 12: Stellbereich
- 13: Hubzylinder
- 14: Verbindung
- 15: Geräteführungssystem
- 16: Vorderfurchenbreite
- 17: Längsachse Traktor
- 18: Traktor
- 19: Längsachse Pflug
- 20: Lenkachse
- 21: aktuelle Position
- 22: automatische Lenkeinrichtung
- 23: Mittellage
- 24: Versatz
- 25: Hubzylinder
- 26: Furchenwand
- 27: neue Furche
- 28: Pflugkörper
- 29: Fahrtrichtung
- 30: Mähwerk
- 31: Deichsel
- 32: Erfassungsbereich
- 33: Geräte- Ortungsvorrichtung
- 34: Mahdkante
- 35: gemähtes Feld
- 36: Hubzylinder
- 37: Haltearm
- 38: neue Mahdkante
- 39: Bereichsmitte
- 40: ungemähtes Feld
- 41: Längsachse Mähwerk
- 42: Fahrtrichtung Mähwerk
- 43: Abtastbereich Fern
- 44: Abtastbereich Nah
- 45: Abtaststrahl
- 46: Erfassungsbereich
- 47: Hanglage
- 48: Schneidwerk
- 49: Mähdrescher
- 50: Maschinenführungssystem
- 51: geplante Route
- 52: korrigierte Route
- 53: Maschinen- Ortungsvorrichtung
- 54: Geräte- Ortungsvorrichtung
- 55: Getreidefeld
- 56: Stoppelfeld
- 57: Getreidekante
- 58: neue Getreidekante
- 59: Korrekturstelle
- 60: aktuelle Position
- 61: Fahrtrichtung
- 62: Einzugskanal
- 63: linke Seitenwand
- 64: rechte Seitenwand
- 65: geplante Routenrichtung
- 66: Längsachse

## Patentansprüche

1. Spurführungssystem an einer landwirtschaftlichen Arbeitsmaschine mit wenigstens einem Arbeitsgerät, wobei die Arbeitsmaschine auf dem Bearbeitungsfeld von wenigstens einem Maschinenführungssystem spurgeführt und die Lage der Leitgröße zumindest bezüglich des Arbeitsgerätes von einer Geräte- Ortungsvorrichtung ermittelt wird,
**dadurch gekennzeichnet, dass**
die Geräte- Ortungsvorrichtung (3,33,54) die Leitgröße (8,38,57) im Eingriffsbereich des Arbeitsgerätes (2,30,48) ortet und auf das Maschinenführungssystem (4,50) zur optimalen Auslastung des Arbeitsgerätes (2,30,48) korrigierend einwirkt.

2. Spurführungssystem nach Anspruch 1,
**dadurch gekennzeichnet, dass**
das Arbeitsgerät (2,30) zumindest quer zur Längsachse (17) der Arbeitsmaschine (1) beweglich angeordnet ist und die von der Geräte- Ortungsvorrichtung (3,33) geortete Lage der Leitgröße (8,38,57) zumindest von wenigstens einem Geräteführungssystem (15) zur Steuerung der optimalen Auslastung des .Arbeitsgerätes (2,30) verwendet wird.

3. Spurführungssystem nach wenigstens einem der vorherigen Ansprüche 1 oder 2,
**dadurch gekennzeichnet, dass**
die Position (21,60) der Arbeitsmaschine (1) auf einem Bearbeitungsfeld (9,10,35,40,33,36) mit einer Navigationseinrichtung (5,51) ermittelt und das Maschinenführungssystem (4,50) die Arbeitsmaschine (1) entlang einer geplanten Route (6,51) in Abhängigkeit von der ermittelten Position (21,60) führt.

4. Spurführungssystem nach wenigstens einem der vorherigen Ansprüche 1 bis 3,
**dadurch gekennzeichnet, dass**
die Lage der Leitgröße (8,38,57) bezüglich der Arbeitsmaschine (1) mit wenigstens einer Maschinen- Ortungsvorrichtung (53) detektiert wird, wobei das Maschinenführungssystem (4,50) die Arbeitsmaschine (1) entlang der Leitgröße (8,38,57) in Abhängigkeit dieser georteten Lage führt.

5. Spurführungssystem nach wenigstens einem der vorherigen Ansprüche 1 bis 4,
**dadurch gekennzeichnet, dass**
die Geräte- Ortungsvorrichtung (3,33,54) und/oder das Geräteführungssystem (15) auf das Maschinenführungssystem (4,50) korrigierend einwirkt, wenn der mögliche Erfassungsbereich (11,32,46) der Geräte- Ortungsvorrichtung (3,33,54) und/oder der Stellbereich (12) des Geräteführungssystems (15) nicht ausreicht, um eine Änderung der georteten Lage der Leitgröße (8,38,57) zu erfassen und/oder darauf reagieren zu können.

6. Spurführungssystem nach wenigstens einem der vorherigen Ansprüche 1 bis 5,
**dadurch gekennzeichnet, dass**
die Geräte- Ortungsvorrichtung (3,33,54) und/oder das Geräteführungssystem (15) auf das Maschinenführungssystem (4,50) korrigierend einwirkt, wenn die Geräte- Ortungsvorrichtung (3,33,54) und/oder das Geräteführungssystem (15) über einen definierten Zeitraum mit einer von der Mittellage (23) abweichenden Lage der Leitgröße (8,38,57) und/oder mit einer derartigen abweichenden Einstellung (24) betrieben wird.

7. Spurführungssystem nach wenigstens einem der vorherigen Ansprüche 1 bis 6,
**dadurch gekennzeichnet, dass**
die für das Maschinenführungssystem (4,50) maßgebliche Führungsgröße (6,39,51) in Abhängigkeit von der von der Geräte- Ortungsvorrichtung (3,33,54) und/oder dem Geräteführungssystem (15) veranlassten Korrektur, eine Korrektur dieser Führungsgröße (6,39,51) bewirkt.

8. Spurführungssystem nach wenigstens einem der vorherigen Ansprüche 1 bis 7,
**dadurch gekennzeichnet, dass**
das Geräteführungssystem (15), bei einer von der Mittellage (23) abweichenden Einstellung des Arbeitsgerätes (2,30), die Arbeitsbreite PB des Arbeitsgerätes (2,30) derart verstellt, dass die bei der Bearbeitung neu erzeugte Leitgröße (27,38), annähernd in einem Abstand von der Größe der Normalarbeitsbreite PAN zur nächsten parallel geplanten Route (7) verläuft.
